# EUROPÄISCHE PATENTANMELDUNG

(11) **EP 1 665 970 A1**
(43) Veröffentlichungstag der Anmeldung: **07.06.2006**
(21) Anmeldenummer: 05026292.2
(22) Anmeldetag: 02.12.2005
(51) Int. Cl.: A47J 47/14, B65D 81/34

(54) **Behältnis zum Lagern sowie zum Kochen oder Backen von Gerichten**

(30) Priorität: 04.12.2004 DE 202004018759 U
(71) Anmelder: Kaya, Nihat, 79244 Münstertal (DE)
(72) Erfinder: Kaya, Nihat, 79244 Münstertal (DE)
(74) Vertreter: Goy, Wolfgang

(57) **Zusammenfassung**

Die Erfindung betrifft ein Behältnis zum Lagern sowie zum Kochen oder Backen von Gerichten, welches zum einen einfach handhabbar ist und welches zum anderen eine schnelle und rationelle Herstellung von Gerichten ermöglicht. Das Behältnis weist eine Aufnahmeform 1 mit Deckel 4 für das Gericht auf. Insbesondere enthält das Behältnis die Grundelemente für die Herstellung einer Pizza, nämlich den Teig sowie eventuell auf diesem Teig eine Basisbelag der Pizza. Dieser Basisbelag kann aus Käse sowie Tomaten bestehen.

## Beschreibung

Die Erfindung betrifft ein Behältnis zum Lagern sowie zum Kochen oder Backen von Gerichten.

Heutzutage gibt es neben dem traditionellen Kochen immer mehr das Bestreben, das Herstellen von Gerichten zu vereinfachen. Dies sieht dann so aus, daß zum Kochen oder Bakken des Gerichtes dieses nur noch entweder in den Backofen oder in die Mikrowelle gegeben wird, um auf diese Weise den Koch- oder Backvorgang durchzuführen.

Der Erfindung liegt die Aufgabe zugrunde, ein Behältnis zum Lagern sowie zum Kochen oder Backen von Gerichten zu schaffen, welches zum einen einfach handhabbar ist und welches zum anderen eine schnelle und rationelle Herstellung von Gerichten ermöglicht.

Die technische L ö s u n g ist gekennzeichnet durch eine Aufnahmeform mit Deckel für das Gericht.

Die Grundidee der Erfindung besteht darin, das vorgefertigte Gericht in einer Aufnahmeform mit Deckel zu lagern, frisch zu halten und schließlich bei Bedarf zu erwärmen bzw. warmzuhalten oder zu backen. Das Behältnis kann dabei entweder als Einweg-Behältnis ausgebildet sein (insbesondere für Bringdienste, beispielsweise Pizza-Bringdienste). Aber auch die Möglichkeit eines Mehrweg-Behältnisses ist denkbar. Die Grundidee des Behältnisses liegt in einer wannenförmigen Aufnahmeform beispielsweise in der Art einer Menü-Schale oder als Backeinheit für eine Pizza. Indem die Aufnahmeform mit einem Deckel versehen ist, ist dadurch eine problemlose Lagerung möglich, indem zum einen ein Schutz und zum anderen die Stapelbarkeit der Behältnisse gewährleistet ist. Insgesamt ist somit ein Behältnis für eine rationelle Lagerung sowie Bereitstellung der Gerichte für den Verzehr geschaffen.

Eine Weiterbildung schlägt gemäß Anspruch 2 vor, daß die Aufnahmeform in einem massiven Backblech anordenbar ist. Die Grundidee hier besteht darin, daß das Backblech für den mehrfachen Gebrauch vorgesehen ist, um beispielsweise Pizzen herstellen zu können. Die eigentliche Pizza befindet sich in der Aufnahmeform und kann nach dem Backen dem Backblech entnommen und in der Aufnahmeform (mit Deckel) transportiert werden. Das Backblech bleibt in der Pizzeria und kann zum Backen weiterer Pizzen wiederverwendet werden, indem eine neue Aufnahmeform eingesetzt wird. Das Backblech sollte für ca. 300 bis 330°C ausgelegt sein. Das Gewicht beträgt ca. 80 bis 100g bzw. 1/3 des Gewichtes eines Pizzateigs. Dadurch verbiegt sich das Backblech nicht im Ofen und liegt auf der Steinfläche des Ofens voll auf. Dadurch ist gewährleistet, daß der Pizzaboden gleichmäßig backt.

Die Aufnahmeform besteht gemäß einer ersten Alternative in Anspruch 3 aus Aluminium, insbesondere aus entmagnetisiertem Aluminium. Das entmagnetisierte Aluminium hat den Vorteil, daß die Aluminiumform in die Mikrowelle gegeben werden kann.

Eine zweite Alternative schlägt gemäß Anspruch 4 vor, daß die Aufnahmeform aus Kunststoff, insbesondere aus mikrowellengeeignetem Kunststoff besteht. Als Kunststoff wird vorzugsweise Hart-Kunststoff verwendet.

Vorzugsweise ist gemäß Anspruch 5 die Aufnahmeform innenseitig mit einer Beschichtung versehen. Die Beschichtung hat den Vorteil, daß die in der Aufnahmeform befindliche Speise sich leichter entnehmen läßt, wenn diese Beschichtung entsprechend ausgebildet ist. Es besteht dann nicht die Gefahr, daß die Ausgangs-Pizza oder die gebackene Speise oder die gegarte Speise an der Aufnahmeform hartnäckig festklebt und nicht entnommen werden kann. Auch soll mit der Beschichtung verhindert werden, daß bei einer Aluminiumform das Aluminium angegriffen wird.

Gemäß Anspruch 6 kann es sich bei der Beschichtung insbesondere um eine Teflon-Beschichtung, aber auch um eine Aluminium-Beschichtung oder um ein eingelegtes Backpapier handeln. Andere Materialien sind selbstverständlich ohne weiteres denkbar. Sofern es sich bei der Beschichtung um Aluminium handelt, sollte dies wegen der Mikrowelle entmagnetisiert sein. Bei dem Backpapier kann es sich um übliches Backpapier handeln, wie es für Backzwecke verwendet wird. Die Verwendung von Backpapier hat den Vorteil, daß eine bereits benutzte Aufnahmeform neu mit Backpapier versehen werden kann, um so die eigentliche Aufnahmeform wiederverwenden zu können.

Die Weiterbildung gemäß Anspruch 7 schlägt vor, daß der Boden der Aufnahmeform flexibel ist. Der Effekt besteht darin, daß beispielsweise der Teig beim Backen einer Pizza relativ schwer ist und somit den Boden der Form flach drückt, was sich insgesamt positiv auf das Backergebnis auswirkt.

Die Weiterbildung gemäß Anspruch 8 schlägt unterschiedliche Aufnahmeformen vor. Es kann sich in der Grundform um herkömmliche runde oder rechteckige Formen handeln. Aber auch die Nachbildung vom Gegenständen, Tieren oder Pflanzen ist denkbar.

Der Deckel ist gemäß der Weiterbildung in Anspruch 9 vorzugsweise auf die Aufnahmeform aufklippsbar. Dies hat den Vorteil, daß der Deckel einen festen Halt auf der Aufnahmeform findet, daß er aber wieder leicht entfernt werden kann, wenn beispielsweise nach Entfernung des Deckels eine Pizza gebacken und anschließend der Deckel für Transportzwecke wieder aufgeklippst wird.

Vorzugsweise besteht der Deckel aus Kunststoff, insbesondere aus Hart-Kunststoff.

Weiterhin ist der Deckel gemäß der Weiterbildung in Anspruch 11 vorzugsweise innenseitig mit einer Beschichtung aus Aluminium, insbesondere aus entmagnetisiertem Aluminium versehen. Dadurch verringert sich der Wärmeverlust im Innern des Behältnisses.

Eine bevorzugte (und bereits erwähnte) Verwendung des erfindungsgemäßen Behältnisses besteht gemäß der Weiterbildung in Anspruch 12 darin, daß das Behältnis die Grundelemente für die Herstellung einer Pizza enthält. Dies ist dies vor allem der Teig. Vorzugsweise kann auf diesen Teig bereits ein Basisbelag aufgebracht werden, insbesondere gemäß der Weiterbildung in Anspruch 13 Käse sowie Tomaten. Die Grundidee dieser Pizzaform besteht darin, daß eine Basis-Pizza mit Teig sowie einem Basis-Belag gelagert, im Kühlschrank frischgehalten und anschließend problemlos gebacken werden kann, nachdem die restlichen Zutaten auf die Basis-Pizza aufgegeben worden sind. Nach dem Backen wird der Deckel wieder aufgeklippst, so daß die fertige Pizza in der Aufnahmeform ausgeliefert werden kann. Bei dieser Variante besteht die Aufnahmeform insbesondere aus Aluminium und ist innenseitig mit einer Beschichtung dergestalt versehen, daß sich die Pizza vom Kunden leicht aus der Aufnahmeform herauslösen läßt. Dies stellt eine sehr rationelle Art und Weise dar, eine Pizza herstellen zu können. Die vorbereitete Ausgangs-Pizza kann ohne weiteres bis zu 36 Stunden gelagert werden. Die Anwendung liegt dabei nicht nur beim kommerziellen Vertrieb von Pizzen, insbesondere bei Pizzen-Bringdiensten, sondern es ist auch denkbar, daß diese Art der Pizza-Herstellung für den privaten Hausgebrauch einsetzbar ist. Der Kunde kauft sich die Basisversion der Pizza und kann sie dann zu Hause individuell mit weiteren Zutaten belegen.

Drei Ausführungsbeispiele eines erfindungsgemäßen Behältnisses zum Lagern sowie zum Kochen oder Backen von Gerichten werden nachfolgend anhand der Zeichnungen beschrieben. In diesen zeigt:
- Fig. 1: ein Behältnis beispielsweise zum Backen einer Pizza;
- Fig. 2: eine erweiterte Variante der Ausführungsform in Fig. 1, wobei sich das Behältnis in einem Backblech befindet;
- Fig. 3: eine Menü-Schale für ein Fertiggericht.

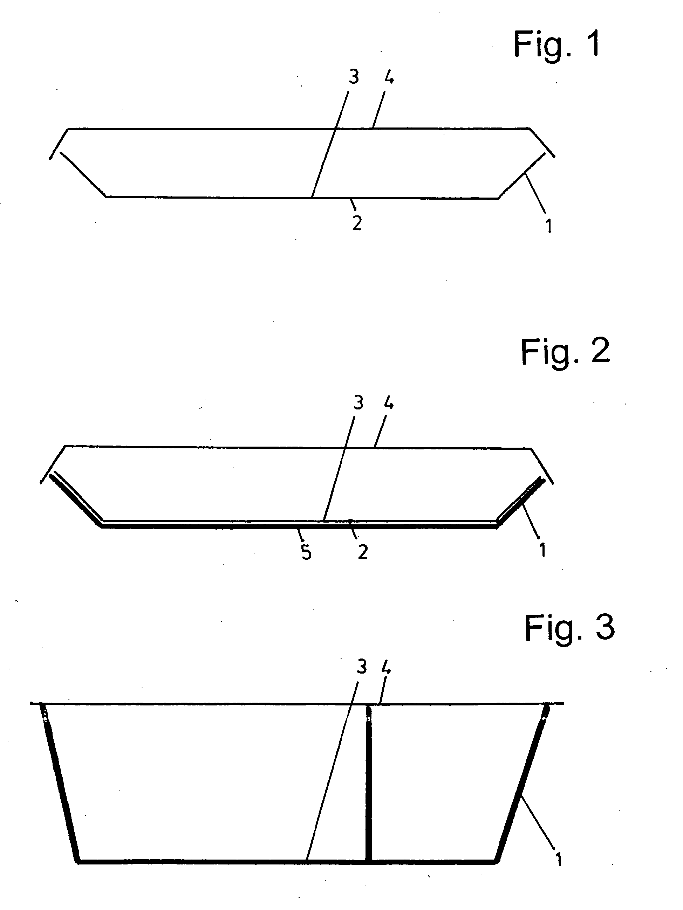

Fig. 1 zeigt eine wannenförmige Aufnahmeform 1 aus Aluminium. Der Boden 2 der Aufnahmeform 1 ist dabei flexibel. Innenseitig ist die Aufnahmeform 1 mit einer Beschichtung 3 versehen. Bei dieser Beschichtung 3 kann es sich um eine Teflon-Beschichtung, aber auch um eingelegtes Backpapier handeln. Andere Materialien sind denkbar. Oberseitig ist die Aufnahmeform 1 von einem aufklippsbaren Deckel 4 abgeschlossen. Dieser besteht aus Hart-Kunststoff und ist innenseitig mit einer Beschichtung aus Aluminium versehen.

Dieses Behältnis kann beispielsweise zum Herstellen einer Pizza dienen. In der Aufnahmeform 1 befindet sich der Teig. Auf diesem Teig befindet sich ein Basis-Belag beispielsweise aus Tomaten sowie Käse. Das ganze Gebilde wird mit dem Deckel 4 verschlossen und kann in einem Kühlschrank gelagert werden. Bei Bedarf kann (nach Entfernen des Deckels 4) der Belag durch weitere Nahrungsmittel ergänzt werden und anschließend die Pizza gebacken werden. Nach Aufklippsen des Deckels 4 kann die Pizza auf einfache Weise transportiert werden.

Die Ausführungsform gemäß Fig. 2 unterscheidet sich von der ersten Ausführungsform in Fig. 1 dadurch, daß die Aufnahmeform 1 in einem massiven Backblech 5 gelagert ist. Nach dem Backen wird die Aufnahmeform 1 aus dem Backblech 5 entnommen. Das Backblech 5 kann dann für einen neuen Backvorgang wiederverwendet werden.

Die Ausführungsform in Fig. 3 zeigt eine Menü-Schale aus Kunststoff, welche ebenfalls innenseitig mit einer Beschichtung 3 versehen ist. Der Deckel 4 schließt die Aufnahmeform 1 ab.

### Bezugszeichenliste

- 1: Aufnahmeform
- 2: Boden
- 3: Beschichtung
- 4: Deckel
- 5: Backblech

## Patentansprüche

1. Behältnis zum Lagern sowie zum Kochen oder Backen von Gerichten,
**gekennzeichnet durch**
eine Aufnahmeform (1) mit Deckel (4) für das Gericht.

2. Behältnis nach dem vorhergehenden Anspruch,
**dadurch gekennzeichnet,**
**daß** die Aufnahmeform (1) in einem massiven Backblech (5) anordenbar ist.

3. Behältnis nach Anspruch 1 oder 2,
**dadurch gekennzeichnet,**
**daß** die Aufnahmeform (1) aus Aluminium, insbesondere aus entmagnetisiertem Aluminium besteht.

4. Behältnis nach Anspruch 1 oder 2,
**dadurch gekennzeichnet,**
**daß** die Aufnahmeform (1) aus Kunststoff, insbesondere aus mikrowellengeeignetem Kunststoff besteht.

5. Behältnis nach einem der vorhergehenden Ansprüche,
**dadurch gekennzeichnet,**
**daß** die Aufnahmeform (1) innenseitig mit einer Beschichtung (3) versehen ist.

6. Behältnis nach Anspruch 5,
**dadurch gekennzeichnet,**
**daß** die Beschichtung (3) aus Teflon, aus Aluminium oder aus einem in die Aufnahmeform (1) eingelegten Backpapier besteht.

7. Behältnis nach einem der vorhergehenden Ansprüche,
**dadurch gekennzeichnet,**
**daß** der Boden (2) der Aufnahmeform (1) flexibel ist.

8. Behältnis nach einem der vorhergehenden Ansprüche,
**dadurch gekennzeichnet,**
**daß** die Aufnahmeform (1) rund, rechteckig oder von ihrer Gestaltung her an gegenständliche, tierische oder pflanzliche Formen angelehnt ist.

9. Behältnis nach einem der vorhergehenden Ansprüche,
**dadurch gekennzeichnet,**
**daß** der Deckel (4) für die Aufnahmeform (1) aufklippsbar ist.

10. Behältnis nach einem der vorhergehenden Ansprüche,
**dadurch gekennzeichnet,**
**daß** der Deckel (4) aus Kunststoff besteht.

11. Behältnis nach Anspruch 10,
**dadurch gekennzeichnet,**
**daß** der Deckel (4) innenseitig mit Aluminium beschichtet ist.

12. Behältnis nach einem der vorhergehenden Ansprüche,
**dadurch gekennzeichnet,**
**daß** das Behältnis die Grundelemente für die Herstellung einer Pizza enthält, nämlich den Teig sowie eventuell auf diesem Teig eine Basisbelag der Pizza.

13. Behältnis nach Anspruch 12,
**dadurch gekennzeichnet,**
**daß** der Basisbelag aus Käse sowie Tomaten besteht.
